# EUROPÄISCHE PATENTANMELDUNG

(11) **EP 4 336 293 A1**
(43) Veröffentlichungstag der Anmeldung: **13.03.2024**
(21) Anmeldenummer: 22194589.2
(22) Anmeldetag: 08.09.2022
(51) Int. Cl.: G05B 23/02

(54) **VERFAHREN ZUM WARNEN EINES BENUTZERS EINER OPERATOR STATION, COMPUTERPROGRAMMPRODUKT, STEUEREINHEIT UND AUTOMATISIERUNGSANLAGE**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Die Erfindung betrifft ein Verfahren (100) zum Warnen eines Benutzers einer Operator Station (10) einer Automatisierungsanlage (20), die eine Mehrzahl an Baugruppen (22) umfasst, die jeweils mit einer Mehrzahl an Sensoren (26) ausgestattet sind. Das Verfahren (100) umfasst einen ersten Schritt (110), in dem ein Bereitstellen der Automatisierungsanlage (20) und der Operator Station (10) in einem aktiven Betriebszustand erfolgt. In einem zweiten Schritt (120) wird eine physikalische Größe (13) und/oder einer Steuergröße (11) durch einen der Sensoren (26) erfasst, anhand dessen ein baugruppenspezifischer Alarmzustand (30) erkannt wird, der an den Benutzer ausgegeben wird. Weiter umfasst das Verfahren (100) einen dritten Schritt, in dem ein Ermitteln zumindest eines vorgebbaren Warnmeldungsparameters (35) des baugruppenspezifischen Alarmzustands (30) durchgeführt wird. Weiter erfolgt in einem vierten Schritt (140) ein visuell überlappungsfreies Ausgeben einer Ergänzungsanzeige (18, 37, 38) über eine graphische Benutzeroberfläche (15) der Operator Station (10), die durch den Warnmeldungsparameter (35) mit dem baugruppenspezifischen Alarmzustand (30) verknüpft ist, wenn ein Mehrquadrantenbetrieb der graphischen Benutzeroberfläche (15) vorliegt. Die Erfindung betrifft auch ein korrespondierendes Computerprogrammprodukt (60), eine korrespondierende Steuereinheit (40) und eine entsprechend ausgestattete Automatisierungsanlage (20) .

## Beschreibung

Die Erfindung betrifft ein Verfahren zum Warnen eines Benutzers einer Operator Station einer Automatisierungsanlage und ein Computerprogrammprodukt hierfür. Die Erfindung betrifft ebenso eine entsprechende Steuereinheit und eine Automatisierungsanlage, die über eine solche Steuereinheit verfügt.

Aus der Europäischen Patentanmeldung EP 3 480 672 A1 ist ein Verfahren zum Erkennen und Anzeigen von Operator-Zugriffen auf Prozessobjekte bekannt, bei dem ein Prozessleitsystem ein Prozessabbild aufweist, das mit Prozessabbild-Bausteinen versehen ist, die zu Prozessobjekten gehören. Ferner ist darin ein User-Interface zur Prozessbeobachtung und zur Prozessführung vorgesehen.

Die Druckschrift EP 3 690 580 A1 offenbart ein Verfahren zur gemeinsamen Visualisierung von Prozessdaten und Prozessalarmen, die jeweils eine Priorität aufweisen. Beim Auslösen eines Alarms werden Verläufe von Prozessdaten einem Benutzer graphisch angezeigt, die zur Auslösung des Alarms geführt haben.

Operator Stations werden in einer Vielzahl an Automatisierungsanlagen zur Steuerung dieser eingesetzt. Automatisierungsanlagen weisen eine zunehmende Anzahl an Überwachungssensoren auf, so dass ein Benutzer mit einer steigenden Komplexität des Betriebs konfrontiert ist, insbesondere wenn vor einem bestimmungswidrigen Betriebszustand zu warnen ist und/oder auf diesen zu reagieren ist. Der Erfindung liegt die Aufgabenstellung zugrunde, einen Benutzer derart zu warnen, dass eine sach- und situationsgerechte Reaktion auf einen bestimmungswidrigen Betriebszustand schneller eingeleitet werden kann.

Die Aufgabenstellung wird durch ein erfindungsgemäßes Verfahren zum Warnen eines Benutzers einer Operator Station gelöst. Das Verfahren ist unter anderem dazu geeignet, den Benutzer vor einem bestimmungswidrigen Betriebszustand der Automatisierungsanlage zu warnen. Die Automatisierungsanlage verfügt über eine Mehrzahl an Baugruppen, die jeweils eine funktionelle Einheit bilden. Beispielsweise kann ein Auslassventil an einem Tank als Baugruppe aufgefasst werden, an der mit Fluiddruck, Durchfluss, Temperatur und Vibrationsbeanspruchung mehrere physikalische Größen vorliegen können, anhand der ein bestimmungsgemäßer bzw. bestimmungswidriger Betriebszustand charakterisiert sein kann. Ebenso ist das Auslassventil am Tank vorgebbar betätigbar, wodurch zumindest eine der genannten physikalischen Größen beeinflussbar ist. Jede der Baugruppen der Automatisierungsanlage verfügt über eine Mehrzahl an Sensoren, die dazu ausgebildet sind, eine physikalische Größe und/oder eine Steuergröße an einer Komponente der Baugruppe zu erfassen. Unter einer Steuergröße ist beispielsweise ein Betätigungszustand oder ein Sollwert zu verstehen. Das erfindungsgemäße Verfahren umfasst einen ersten Schritt, in dem die Automatisierungsanlage und die Operator Station in einem aktiven Betriebszustand bereitgestellt wird. Unter einem aktiven Betriebszustand ist ein funktionstüchtig montierter Zustand der Automatisierungsanlage mit ihrer Operator Station zu verstehen. Ebenso umfasst das Verfahren einen zweiten Schritt, in dem eine physikalische Größe durch zumindest einen der Sensoren erfasst wird. Anhand der erfassten physikalischen Größe und/oder Steuergröße wird ein baugruppenspezifischer Alarmzustand erkannt und an den Benutzer ausgegeben. Der baugruppenspezifische Alarmzustand zeigt einen bestimmungswidrigen Betriebszustand der entsprechenden Baugruppe an. Dies kann beispielsweise ein Rückgang eines Durchflusses am Auslassventil eines Tanks auf im Wesentlichen Null sein, wenn für dieses gleichzeitig eine Offen-Stellung vorgegeben ist.

Weiter umfasst das Verfahren einen dritten Schritt, in dem zum baugruppenspezifischen Alarmzustand ein vorgebbarer Warnmeldungsparameter ermittelt wird. Der Warnmeldungsparameter kann beispielsweise anhand einer Datenbank ermittelt werden, in der dem baugruppenspezifischen Alarmzustand typisiert gespeichert ist und der Warnmeldungsparameter zugeordnet ist. Durch den Warnmeldungsparameter ist vorgebbar, in Verbindung mit welchen weiteren Angaben der baugruppenspezifische Alarmzustand an den Benutzer auszugeben ist. Ferner weist das Verfahren einen vierten Schritt auf, der durchgeführt wird, wenn an einer graphischen Benutzeroberfläche, an der der baugruppenspezifische Alarmzustand auszugeben ist, ein Mehrquadrantenbetrieb vorliegt. Unter einem Mehrquadrantenbetrieb ist ein Betrieb mit einer Teilung der graphischen Benutzeroberfläche zu verstehen, wobei in jedem Quadranten unabhängig Informationen im Zusammenhang mit einer vorgebbaren Komponente oder Baugruppe der Automatisierungsanlage ausgebbar ist. Der Begriff Quadrant ist hierbei nicht nur als rechteckige Vierteilung der graphischen Benutzeroberfläche aufzufassen, sondern als jegliche Teilung der graphischen Benutzeroberfläche in diskrete unabhängige Abschnitte.

Im vierten Schritt erfolgt ein visuell überlappungsfreies Ausgeben einer Ergänzungsanzeige über die graphische Benutzeroberfläche der Operator Station. Die Ergänzungsoberfläche ist durch den Warnmeldungsparameter mit dem baugruppenspezifischen Alarmzustand verknüpft, also vorgegeben. Durch den Warnmeldungsparameter kann vorgegeben sein, an welcher Position, insbesondere in welchem Quadranten, die entsprechende Ergänzungsanzeige auszugeben ist. Gleichermaßen kann durch den Warnmeldungsparameter vorgegeben sein, was in der Ergänzungsanzeige anzuzeigen ist. Dadurch ist beispielsweise beim zuvor exemplarisch skizzierten Tank vorgebbar, dass eine Tankpegelanzeige als Ergänzungsanzeige im vierten Schritt in einem vorgebbaren Quadranten ausgegeben wird, wenn der baugruppenspezifische Alarmzustand angezeigt wird.

Mittels des erfindungsgemäßen Verfahrens sind folglich neben einem baugruppenspezifischen Alarmzustand über die Ergänzungsanzeige Angaben in sinnfälliger Weise darstellbar, die dem Benutzer erlauben, beschleunigt Gegenmaßnahmen im Betrieb der Automatisierungsanlage einzuleiten. Die Position der Ergänzungsanzeige, also der jeweilige Quadrant der graphischen Benutzeroberfläche, kann ebenso in sinnfälliger Weise eingestellt werden. Der Warnmeldungsparameter kann in einfacher Weise bei einer Projektierung der Operator Station eingestellt werden. Insgesamt erlaubt das erfindungsgemäße Verfahren einen sichereren Betrieb der Automatisierungsanlage.

In einer Ausführungsform des beanspruchten Verfahrens kann im vierten Schritt eine Mehrzahl an Ergänzungsanzeigen visuell überlappungsfrei über die graphische Benutzeroberfläche der Operator Station ausgegeben werden. Die Ergänzungsanzeigen können somit mehrere Angaben über Komponenten oder Baugruppen der Automatisierungsanlage anzeigen, die ursächlich für den vorliegenden gruppenspezifischen Alarmzustand sind und/oder die dem Benutzer sinnfällig vermitteln, ob oder in welchem Umfang eine Gegenmaßnahme einleitbar ist. Beispielsweise können die Ergänzungsanzeigen über die Quadranten in einer Positionierung auf der graphischen Benutzeroberfläche angeordnet sein, die nach einem wählbaren Kriterium geordnet ist. Beispielsweise können die Ergänzungsanzeigen derart sortiert angeordnet sein, dass entlang der zugehörigen Sortierrichtung zuerst die Ergänzungsanzeige der Komponente oder Baugruppe angezeigt wird, die mit der höchsten Wahrscheinlichkeit die Ursache für den gruppenspezifischen Alarmzustand ist. Ein Benutzer ist infolgedessen bei einem Einleiten einer Gegenmaßnahme zielgerichtet unterstützbar. Kritische, also schadensträchtige, Betriebszustände der Automatisierungsanlage sind durch das beanspruchte Verfahren beschleunigt erkennbar. Dadurch sind weiterschädigende Betriebszustände minimierbar, wodurch auch die Wirtschaftlichkeit der Automatisierungsanlage erhöht wird.

Darüber hinaus kann zumindest eine der Ergänzungsanzeigen jeweils als Statusanzeige einer Komponente der Baugruppe ausgebildet sein, zu der der baugruppenspezifische Alarmzustand gehört. Alternativ kann die Ergänzungsanzeige auch als eine Eingabeoberfläche für eine Steuerung zumindest einer Komponente ausgebildet sein, die zur Baugruppe des baugruppenspezifischen Alarmzustands gehört. Dem Benutzer kann so selbsttätig eine Statusanzeige bereitgestellt werden, die Auskunft über eine Ursache des baugruppenspezifischen Alarmzustands liefert oder eine Steuereingriffsmöglichkeit bereitstellen, mit der eine Gegenmaßnahme durchführbar ist. Die Statusanzeige bzw. Eingabeoberfläche kann durch den Warnmeldungsparameter vorgegeben sein. Das beanspruchte Verfahren ist folglich an eine Vielzahl an Baugruppen in Automatisierungsanlagen anpassbar und bietet ein breites Einsatzspektrum.

In einer weiteren Ausführungsform des beanspruchten Verfahrens kann ein Einquadrantenbetrieb der graphischen Benutzeroberfläche vorliegen. In einem fünften Schritt des Verfahrens wird eine Mehrzahl an Ergänzungsanzeigen visuell überlappend über die die graphische Benutzeroberfläche ausgegeben. Unter einem visuell überlappenden Ausgeben ist beispielsweise eine Darstellung teilweise übereinanderliegend angeordneten Fenstern zu verstehen. Dabei wird eine als Statusanzeige ausgebildet Ergänzungsanzeige einer Komponente unverdeckt angezeigt, die als ursächlich für den baugruppenspezifischen Alarmzustand erkannt wird. Insbesondere kann die Statusanzeige in der graphischen Benutzeroberfläche im Vordergrund angezeigt werden. Die Komponente kann beispielsweise durch eine Künstliche Intelligenz, die auf einer Steuereinheit der Operator Station in aktiven Betriebszustand ausgeführt wird, erkannt werden. Die Ergänzungsanzeigen können visuell verdeckt derart dargestellt werden, dann diese nach einem einstellbaren Kriterium sortiert angeordnet sind, beispielsweise absteigend nach einer Wahrscheinlichkeit, dass die jeweilige Komponente ursächlich ist für den gruppenspezifischen Alarmzustand. Der Einquadrantenbetrieb kann alternativ zum Mehrquadrantenbetrieb vorliegen. Dementsprechend kann der fünfte Schritt alternativ zum vierten Schritt durchgeführt werden. Weiter alternativ können der vierte und fünfte Schritt hintereinander durchgeführt werden. Dazu kann beispielsweise durch eine Benutzereingabe ein Wechsel zwischen dem Mehrquadrantenbetrieb und dem Einquadrantenbetrieb vorgegeben werden. Die Sortierung nach den einstellbaren Kriterien im Mehrquadrantenbetrieb und im Einquadrantenbetrieb kann gleich sein. Dadurch wird das Erfassen des in der Automatisierungsanlage vorliegenden baugruppenspezifischen Alarmzustands weiter vereinfacht, was ein beschleunigtes und zielgerichtetes Einleiten von Gegenmaßnahmen durch den Benutzer ermöglicht.

Darüber hinaus kann im beanspruchten Verfahren die Komponente als ursächlich für den gruppenspezifischen Alarm erkannt wird, an der der Sensor angeschlossen ist, anhand dessen der baugruppenspezifische Alarmzustand im zweiten Schritt erkannt wird. Bei einem Defekt einer Komponente ist an dieser mit einer zumindest untypischen Funktionsweise zu rechnen. Dementsprechend ist an einer defekten Komponente zuerst mit einer bestimmungswidrigen physikalischen Größe und/oder Steuergröße zu rechnen. Folglich wird durch das beanspruchte Verfahren die Aufmerksamkeit eines Benutzers zielgerichtet auf die Komponente einer Baugruppe in einem baugruppenspezifischen Alarmzustand gerichtet, die mit erhöhter Wahrscheinlichkeit die Ursache für den baugruppenspezifischen Alarmzustand ist. Hierdurch wird eine Diagnose des vorliegenden baugruppenspezifischen Alarmzustands, beispielsweise durch den Benutzer oder eine Künstliche Intelligenz, beschleunigt. Ebenso wird ein Einleiten geeigneter Gegenmaßnahmen beschleunigt. Insgesamt wird so die Betriebssicherheit der zugehörigen Automatisierungsanlage weiter erhöht.

Des Weiteren können im beanspruchten Verfahren der vierte Schritt oder der fünfte Schritt durch einen Funktionsaufruf des Benutzers auf der graphischen Benutzeroberfläche ausgelöst werden. Der Funktionsaufruf kann beispielsweise als Dialog mit dem Benutzer, insbesondere über ein Dialogfenster auf der graphischen Benutzeroberfläche, ausgebildet sein. Dadurch wird ein selbsttätiges Verändern der graphischen Benutzeroberfläche durch die Operator Station vermieden. Insbesondere wird vermieden, dass einem Benutzer der unmittelbare Zugriff auf eine graphische Benutzeroberfläche entzogen wird, auf der gleichzeitig zum Ablauf des beanspruchten Verfahrens Steuereingaben vom Benutzer entgegengenommen werden. Insgesamt werden so zusätzliche Bedienschritte des Benutzers eingespart. Die so erzielte Zeitersparnis wiederum erhöht ebenso die Betriebssicherheit einer entsprechend ausgebildeten Automatisierungsanlage.

In einer Ausführungsform des beanspruchten Verfahrens kann der Warnmeldungsparameter durch den Benutzer oder eine Künstliche Intelligenz vorgegeben sein. Die Künstliche Intelligenz kann auf der Steuereinheit der Operator Station in einem aktiven Betriebszustand ausführt werden. Dadurch sind eine oder mehrere Ergänzungsanzeigen in einfacher Weise einstellbar und mit aussagekräftigen Zusatzangaben versehbar. Bei einem Vorgeben durch den Benutzer ist vorhandene Erfahrung mit ähnlichen oder baugleichen Automatisierungsanlagen nutzbar. Ein Vorgeben durch eine Künstliche Intelligenz, beispielsweise einem trainierbaren neuronalen Netz, erlaubt es, das beanspruchte Verfahren schnell selbsttätig einzurichten. Weiter sind durch die Künstliche Intelligenz Zusammenhänge darstellbar, die einem Benutzer nicht ersichtlich sind. Die Warnmeldungsparameter können beispielsweise basierend auf einem Verfahren zum Herstellen einer Überwachungsvorrichtung gemäß der bisher unveröffentlichten deutschen Patentanmeldung DE 10 2022 200 694.1 erfolgen. Der Offenbarungsgehalt von DE 10 2022 200 694.1 wird durch Verweisung in die vorliegende Anmeldung mit einbezogen. Ferner ist die Künstliche Intelligenz im laufenden Betrieb weitertrainierbar. Hierdurch ist das beanspruchte Verfahren selbsttätig an künftige Anforderungen anpassungsfähig und weist eine erhöhte Vielseitigkeit und Nutzungsdauer auf.

In einer weiteren Ausführungsform des beanspruchten Verfahrens wird im zweiten Schritt eine Mehrzahl an baugruppenspezifischen Alarmzuständen erkannt. Der vierte oder der fünfte Schritt werden hierbei für einen baugruppenspezifischen Alarmzustand ausgeführt, wenn dieser vom Benutzer ausgewählt wird. Alternativ kann auch der dritte Schritt kombiniert mit dem vierten Schritt oder mit dem fünften Schritt ausgeführt werden, wenn der zugehörige baugruppenspezifische Alarmzustand vom Benutzer ausgewählt wird. Das Auswählen kann über die graphische Benutzeroberfläche erfolgen. Bei Vorliegen mehrerer baugruppenspezifischer Alarmzustände kann der Benutzer auswählen, welcher baugruppenspezifische Alarmzustand näher auf der graphischen Benutzeroberfläche zu inspizieren ist. Dadurch wird verhindert, dass bei gleichzeitigem oder schnell aufeinanderfolgendem Eintreten mehrerer baugruppenspezifischer Alarmzustände der Benutzer abgelenkt wird. Das Verfahren erlaubt dem Benutzer, auf komplexe Alarmzustände zielgerichtet zu reagieren und bei mehreren baugruppenspezifischen Alarmzuständen aus diesen beschleunigt relevante Angaben abzuleiten. Dadurch wird das Einleiten geeigneter Gegenmaßnahmen vereinfacht und beschleunigt, wodurch die Betriebssicherheit der zugehörigen Automatisierungsanlage weiter erhöht wird.

Ferner kann im beanspruchten Verfahren im vierten Schritt eine erste Ergänzungsmeldung ihrem zugehörigen Warnmeldungsparameter überlappungsfrei angezeigt werden. Ebenso wird eine zweite Ergänzungsmeldung in einem Bereich der graphischen Benutzeroberfläche angezeigt, der vom Warnmeldungsparameter der ersten Ergänzungsmeldungsanzeige nicht erfasst wird. Ein vom Warnmeldungsparameter nicht erfasster Bereich ist ein Bereich auf der graphischen Benutzeroberfläche, für den keine spezifische Ergänzungsanzeige vorgegeben ist. Dementsprechend ist ein solcher nicht vom Warnmeldungsparameter erfasster Bereich ein Bereich der graphischen Benutzeroberfläche, der für eine anderweitige Verwendung frei ist. Der nicht vom Warnmeldungsparameter erfasste Bereich, in dem die zweite Ergänzungsmeldung anzuzeigen ist, kann durch ein Anzeigeverwaltungsmodul der Operator Station erkannt und der zweiten Ergänzungsmeldung zugewiesen werden. Ein solches Anzeigeveraltungsmodul kann beispielsweise als sogenannter Window Manager eines Betriebssystems oder einer Applikation ausgebildet sein. Das beanspruchte Verfahren ist dadurch flexibel ausgebildet und dazu geeignet, auch auf vorliegende bestimmungswidrige Betriebssituationen sachgerecht zu reagieren, also dem Benutzer eine sinnfällige Anzeige bereitzustellen.

Die zugrundeliegende Aufgabenstellung wird ebenso durch ein erfindungsgemäßes Computerprogrammprodukt gelöst, das zum Steuern einer Automatisierungsanlage ausgebildet ist. Die zu steuernde Automatisierungsanlage verfügt über eine Mehrzahl an Baugruppen mit jeweils einer Mehrzahl an Sensoren. Das Computerprogrammprodukt ist zu einem Empfangen und Verarbeiten von Daten der Sensoren ausgebildet. Erfindungsgemäß ist das Computerprogrammprodukt dazu eingerichtet, ein Verfahren nach zumindest einer der oben skizzierten Ausführungsformen auszuführen.

Ebenso wird die eingangs beschriebene Aufgabe durch eine erfindungsgemäße Steuereinheit gelöst, die dazu ausgebildet, eine Automatisierungsanlage zu steuern. Die zu steuernde Automatisierungsanlage weist eine Mehrzahl an Baugruppen auf, die jeweils mit einer Mehrzahl an Sensoren versehen sind. Die Steuereinheit verfügt über eine Recheneinheit und eine Speichereinheit, die dazu ausgebildet sind, ein Computerprogrammprodukt auszuführen. Erfindungsgemäß ist das Computerprogrammprodukt gemäß einer der oben dargestellten Ausführungsformen ausgebildet.

Gleichermaßen wird die oben dargestellte Aufgabenstellung durch eine erfindungsgemäße Automatisierungsanlage gelöst, die eine Mehrzahl an Baugruppen umfasst, die jeweils eine Mehrzahl an Sensoren aufweisen. Die Sensoren sind jeweils über eine kommunikative Datenverbindung mittelbar oder unmittelbar mit der Steuereinheit verbunden. Erfindungsgemäß ist die Steuereinheit nach einer der oben dargestellten Ausführungsformen ausgebildet.

Die Erfindung wird im Folgenden anhand einer Ausführungsform in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Figuren sind untereinander auch kombinierbar. Ferner ist die in den Figuren gezeigte Ausführungsform mit den oben skizzierten Merkmalen kombinierbar. Es zeigen im Einzelnen:
- FIG 1: schematisch eine Ausführungsform des beanspruchten Verfahrens in einem ersten Stadium;
- FIG 2: schematisch die Ausführungsform des beanspruchten Verfahrens in einem zweiten Stadium;
- FIG 3: schematisch die Ausführungsform des beanspruchten Verfahrens in einem dritten Stadium.

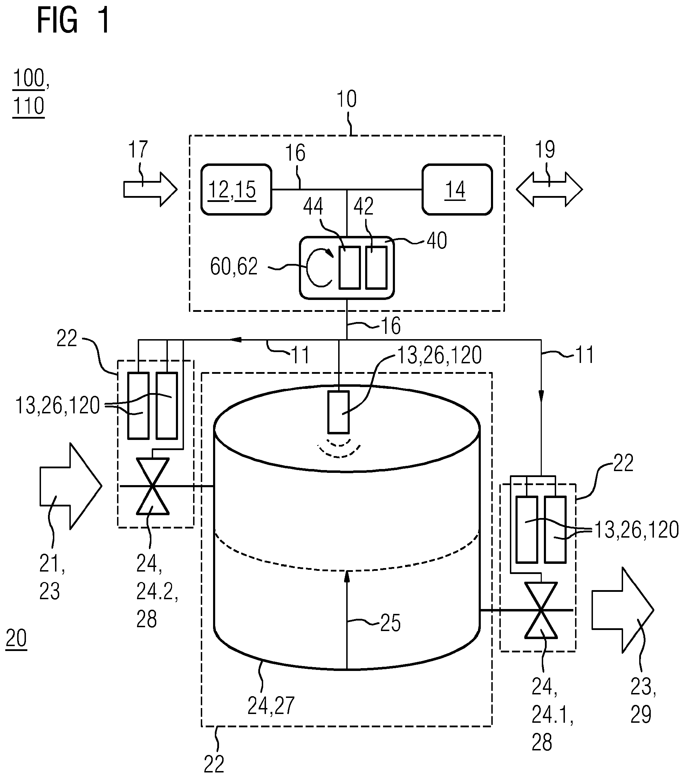

In FIG 1 ist schematisch eine Ausführungsform des beanspruchten Verfahrens 100 in einem ersten Stadium dargestellt. Das Verfahren 100 ist an einer Automatisierungsanlage 20 auszuführen, die mit einer Operator Station 10 über eine kommunikative Datenverbindung 16 verbunden ist. Die kommunikative Datenverbindung 16 kann beispielsweise als Feldbus oder als Ethernet ausgebildet sein. Die Automatisierungsanlage 20 umfasst eine Mehrzahl an Komponenten 24, die jeweils zu Baugruppen 22 gehören. Die Automatisierungsanlage 20 umfasst als Komponente 24 einen Tank 27 für eine Flüssigkeit, der über eine als Ventil 28 ausgebildete erste Komponente 24.1 entleerbar ist. Die erste Komponente 24.1 gehört den einer Baugruppe 22, die mit einer Mehrzahl an Sensoren 26 versehen ist, über die jeweils eine physikalische Größe 13 an der ersten Komponente 24.1 erfassbar ist. Ebenso ist der Tank 27 mit einer zweiten Komponente 24.2 versehen, die als Ventil 28 ausgebildet ist und über die ein Zulauf 21 and Flüssigkeit 23 in den Tank 27 vorgebbar ist. Korrespondierend zur ersten Komponente 24.1 ist die zweite Komponente 24.2 mit einer Mehrzahl an Sensoren 26 ausgestattet, mit denen jeweils eine physikalische Größe 13 an der zweiten Komponente 24.2 erfassbar ist. Der Tank 27 gehört als Komponente 24 ebenso zu einer Baugruppe 22 und ist mit einem Sensor 26 ausgestattet, mit dem als physikalische Größe ein Pegelstand 25 erfassbar ist. Die physikalischen Größen 13 von den Sensoren 26 sind im beanspruchten Verfahren 100 erfassbar. Des Weiteren sind die Komponenten 24, also auch die erste und zweite Komponente 24.2 durch Steuergrößen 11 durch eine Steuereinheit 40 der Operator Station 10 beeinflussbar.

Die Steuereinheit 40 umfasst eine Recheneinheit 42 und eine Speichereinheit 44, die zu einem Ausführen eines Computerprogrammprodukts 60 ausgebildet sind. Durch das Computerprogrammprodukt 60 wird auch das beanspruchte Verfahren 100 umgesetzt. Die Steuereinheit 40 ist mit einer Datenschnittstelle 14 verbunden, die zu einem Datenaustausch 19 mit Steuerungssystemen oder Simulationssystemen geeignet ist. Die Datenschnittstelle 14 kann beispielsweise zu einem Datenaustausch 19 per Bus-System, Netzwerkverbindung, insbesondere Ethernet, und/oder per Mobilfunk ausgebildet sein. Des Weiteren ist die Steuereinheit 40 mit einer Anzeigeeinheit 12 verbunden, auf der eine graphische Benutzeroberfläche 15 ausgeführt wird, über die Benutzereingaben 17 empfangbar sind. Die Datenschnittstelle 14 und die Anzeigeeinheit 12 sind jeweils über eine kommunikative Datenverbindung 16 mit der Steuereinheit 40 verbunden.

Das in FIG 1 gezeigte erste Stadium des beanspruchten Verfahrens 100 geht davon aus, dass ein erster Schritt 110 abgeschlossen ist, in dem die Automatisierungsanlage 20 mit der Operater Station 20 funktionstüchtig bereitgestellt ist und dass in der Automatisierungsanlage ein aktiver Betriebszustand vorliegt. Im aktiven Betriebszustand ist insbesondere ein Zufluss 21 und ein Abfluss 29 in bzw. aus dem Tank 27 durch Betätigen zumindest einer der Komponenten 24 beeinflussbar. Dementsprechend kann sich der Pegelstand 25 im Tank 27 im aktiven Betriebszustand ändern. Weiter umfasst das Verfahren 100 einen zweiten Schritt 120, in dem zumindest eine physikalische Größe 13 durch einen der Sensoren 26 erfasst wird. Alternativ oder ergänzend wird im zweiten Schritt 120 eine Steuergröße 11 durch die Steuereinheit 40 erfasst. Durch Auswerten der zumindest einen physikalischen Größe 13 und/oder der Steuergröße 11 wird das Vorliegen eines baugruppenspezifischen Alarmzustands 30 erkannt, der in FIG 1 nicht näher gezeigt ist. Ein baugruppenspezifischer Alarmzustand 30 zeigt einen bestimmungswidrigen Zustand in einer der Baugruppen 22 an. Der baugruppenspezifische Alarmzustand 30 kann durch das Computerprogrammprodukt 60 ermittelt werden, das hierzu eine Künstliche Intelligenz 62 umfassen kann.

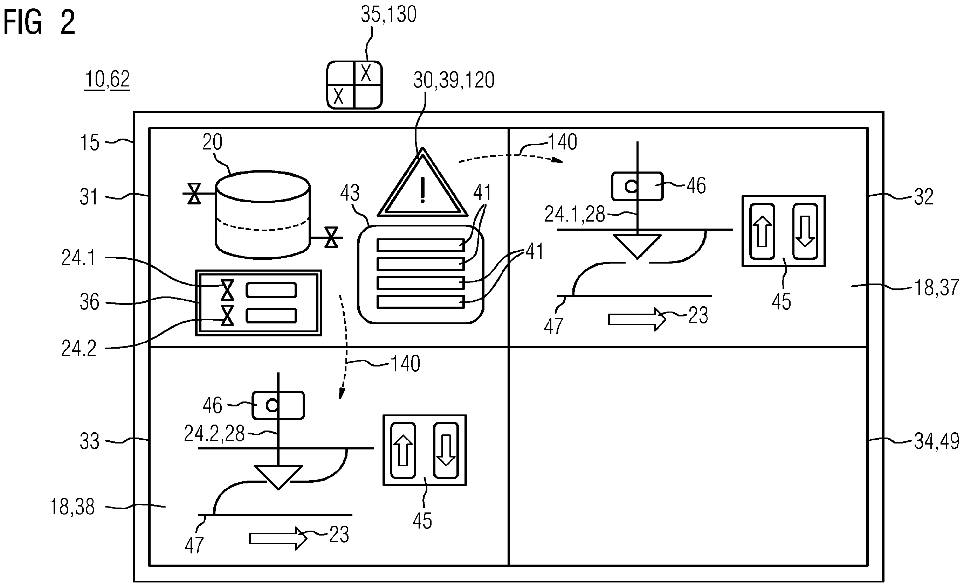

Die Ausführungsform des beanspruchten Verfahrens 100 nach FIG 1 ist in FIG 2 in einem zweiten Stadium schematisch dargestellt, das auf das erste Stadium aus FIG 1 folgt. Im Einzelnen zeigt FIG 2 die graphische Benutzeroberfläche 15, die auf der Anzeigeeinheit 12 gemäß FIG 1 ausgegeben wird. Die graphische Benutzeroberfläche 15 befindet sich in FIG 2 in einem Mehrquadrantenbetrieb, in dem die graphische Benutzeroberfläche 15 in eine Mehrzahl an Quadranten, insbesondere einen ersten Quadranten 31, einen zweiten Quadranten 32, einen dritten Quadranten 33 und einen vierten Quadranten 34 eingeteilt ist. Im ersten Quadranten 31 ist die Automatisierungsanlage 20 in vereinfachter Weise abgebildet. Weiter wird im ersten Quadranten 31 eine Warnmeldung 39 ausgegeben, die den im zweiten Schritt 120 ermittelten baugruppenspezifischen Alarmzustand 30 anzeigt. Ebenso wird im ersten Quadranten 31 eine Alarmübersicht 43 angezeigt, die eine Mehrzahl an gleichzeitig vorliegenden weiteren Alarmen 41 abbildet. Die weiteren Alarme 41 können auch weitere baugruppenspezifische Alarmzustände 30 umfassen. Es wird ebenso ein Dialogfenster 36 im ersten Quadranten 31 ausgegeben, an der zum baugruppenspezifischen Alarmzustand 30, der im zweiten Schritt 120 erkannt wird, die erste und zweite Komponente 24.1, 24.2 zur Auswahl gestellt werden. Zumindest die erste und/oder zweite Komponente 24.1, 24.2 werden als ursächlich für den baugruppenspezifischen Alarmzustand 30 aus dem zweiten Schritt 120 erkannt. Die erste und/oder zweite Komponente 24.1, 24.2 werden durch die auf der Steuereinheit 40 ausgeführte Künstliche Intelligenz 62 erkannt, die als Neuronales Netz ausgebildet sein kann.

Im zweiten Stadium gemäß FIG 2 wird ein dritter Schritt 130 des Verfahrens 100 durchgeführt, in dem ein Warnmeldungsparameter 35 ermittelt wird, der zum vorliegenden baugruppenspezifischen Alarmzustand 30 gehört. Der Warnmeldungsparameter 35 ist durch den Benutzer und/oder die Künstliche Intelligenz 62 vorgebbar. Durch den Warnmeldungsparameter 35 wird vorgegeben, welche der weiteren Quadranten, also der zweite, dritte und/oder vierte Quadrant 32, 33, 34 zum Anzeigen einer Ergänzungsanzeige 18 einzusetzen ist. Das Ausgeben einer ersten und einer zweiten Ergänzungsanzeige 37, 38 wird durch eine Benutzereingabe am Dialogfenster 36 ausgelöst. Basierend auf dem im dritten Schritt 130 ermittelten Warnmeldungsparameter 35 wird in einem vierten Schritt die erste Ergänzungsanzeige 37 ausgegeben. Insbesondere ist durch den vorgebbaren Warnmeldungsparameter 35 vorgegeben, dass die erste Ergänzungsanzeige 37 im zweiten Quadranten 32 anzuzeigen ist und die zweite Ergänzungsanzeige 38 im dritten Quadranten 33. Die erste Ergänzungsanzeige 37 im zweiten Quadranten 32 umfasst eine Abbildung der ersten Komponente 24.1, die als Ventil 28 ausgebildet ist. Insbesondere ist eine Statusanzeige 47 des Ventils 28 dargestellt und eine bestimmungsmäßige Strömungsrichtung der Flüssigkeit 23. Im zweiten Quadranten 32 ist angezeigt, dass das als erste Komponente 24.1 dienende Ventil 28 zumindest teilweise geöffnet ist. Des Weiteren umfasst die erste Ergänzungsanzeige 37 im zweiten Quadranten 32 eine Eingabeoberfläche 45, durch die ein Antriebsmittel 46 des Ventils 28, also der ersten Komponente 24.1, betätigbar ist. Dem Benutzer wird im zweiten Quadranten 32 mit der ersten Ergänzungsanzeige 37 eine detaillierte Übersicht über die erste Komponente 24.1 mitsamt einer Ansteuerungsmöglichkeit zur Verfügung gestellt. In Abhängigkeit vom vorliegenden baugruppenspezifischen Alarmzustand 30 wird dem Benutzer schnell und zielgerichtet eine geeignete Reaktionsmöglichkeit auf den baugruppenspezifischen Alarmzustand 30 bereitgestellt.

Zusätzlich wird im vierten Schritt 140 im dritten Quadranten 33 eine zweite Ergänzungsmeldung 38 ausgegeben. Das Ausgeben der zweiten Ergänzungsmeldung 38 ist durch den vorgebbaren Warnmeldungsparameter 35 festgelegt. In der zweiten Ergänzungsanzeige 38 wird die zweite Komponente 24.2, die als Ventil 28 ausgebildet ist, in Form einer Statusanzeige 47 dargestellt. Ebenso wird eine bestimmungsgemäße Strömungsrichtung der Flüssigkeit 23 angezeigt. Durch die Statusanzeige 47 in der zweiten Ergänzungsmeldung 38 ist wiedergegeben, dass das Ventil 28, also die zweite Komponente 24.2, sich in einer Geschlossen-Stellung befindet. Ferner umfasst die zweite Ergänzungsmeldung 38 eine Eingabeoberfläche 45, durch die ein Antriebsmittel 46 der zweiten Komponente 24.2 betätigbar ist. Dem Benutzer wird auch für die zweite Komponente eine sinnfällige Anzeige in Form der zweiten Ergänzungsanzeige 38 bereitgestellt, die auch eine Ansteuerungsmöglichkeit umfasst.

Die erste und die zweite Ergänzungsanzeige 37, 38, die im vierten Schritt 140 des Verfahrens 100 ausgegeben werden, sind visuell überlappungsfrei ausgebildet. Dementsprechend befindet sich die erste Ergänzungsanzeige 37 vollständig innerhalb des zweiten Quadranten 32 und die zweite Ergänzungsanzeige 38 innerhalb des dritten Quadranten 33. Hierdurch ist eine besonders übersichtliche Darstellung der ersten bzw. zweiten Ergänzungsmeldung 37, 38 gewährleistet. Weiter werden im vierten Schritt 140 nur solche Ergänzungsmeldungen 18 angezeigt, die mit zumindest einer hinreichenden Wahrscheinlichkeit ursächlich für den baugruppenspezifischen Alarmzustand 30 sind. Ferner stellt der vierte Quadrant 34 einen vom Warnmeldungsparameter 35 unerfassten Bereich 49 der graphischen Benutzeroberfläche 15 dar. Der vom Warnmeldungsparameter 35 unerfasste Bereich 49 ist durch ein nicht näher gezeigtes Anzeigeverwaltungsmodul, auch Window Manager genannt, einer Operator Station 10 ansteuerbar, zu der die graphische Benutzeroberfläche 15 gehört. Der unerfasste Bereich 49 ist dadurch im Betrieb der Operator Station 10 flexibel nutzbar.

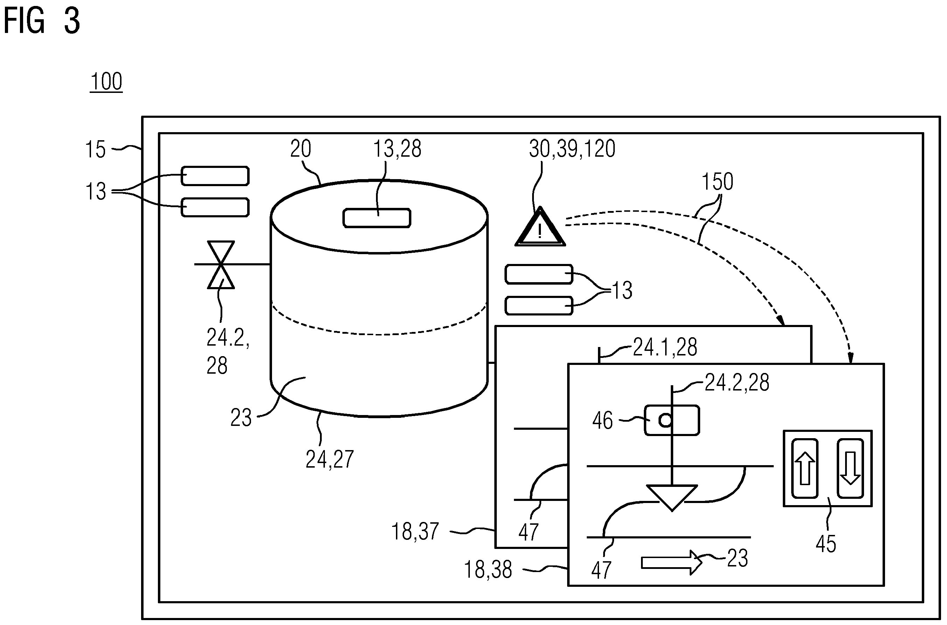

In FIG 3 ist die Ausführungsform des beanspruchten Verfahrens 100 aus FIG 1 und FIG 2 in einem dritten Stadium dargestellt. Das dritte Stadium schließt sich dem zweiten Stadium aus FIG 2 an. Gegenüber FIG 2 erfolgt in FIG 3 ein Umschalten vom Mehrquadrantenbetrieb in einen Einquadrantenbetrieb. Auf der graphischen Benutzeroberfläche 15 wird die Automatisierungsanlage 20 dargestellt. Zusätzlich zur Automatisierungsanlage 20 selbst sind Anzeigen für physikalischen Größen 13 ausgebildet, die an korrespondierenden Bereichen in der Automatisierungsanlage 20 vorliegen. Beispielsweise können eine Durchflussgeschwindigkeit und eine Temperatur der Flüssigkeit 23 angezeigt sein, die durch die zweite Komponente 24.2, die als Ventil 28 ausgebildet ist, fließt. Ferner kann der im Tank 27 vorliegende Pegelstand 25 als physikalische Größe 13 angezeigt sein. Das dritte Stadium nach FIG 3 geht vom abgeschlossenen zweiten Schritt 120 aus, in dem ein baugruppenspezifischer Alarmzustand 30 erkannt ist und als Warnmeldung 39 ausgegeben wird. Des Weiteren erfolgt im dritten Stadium ein fünfter Schritt 150, in dem eine Mehrzahl an Ergänzungsanzeigen 18 ausgegeben wird. Es wird eine erste Ergänzungsanzeige 37 ausgegeben, in der die erste Komponente 24.1, die als Ventil 28 ausgebildet ist, in einer Statusanzeige 47 angezeigt wird. Ebenso wird eine zweite Ergänzungsanzeige 38 ausgegeben, in der eine Statusanzeige 47 zur zweiten Komponente 24.2 dargestellt ist. Die zweite Komponente 24.2 ist hierbei ebenso ein Ventil 28. Die zweite Ergänzungsanzeige 38 umfasst eine Anzeige für eine bestimmungsgemäße Strömungsrichtung der Flüssigkeit 23 und eine Darstellung eines Antriebsmittels 46 der zweiten Komponente 24.2. Weiter weist die zweite Ergänzungsanzeige 38 eine Eingabeoberfläche 45, durch die das Antriebsmittel 46 des Ventils 28, also der zweiten Komponente 24.2, betätigbar ist. Die erste und zweite Ergänzungsanzeige 37, 38, die im fünften Schritt 150 ausgegeben werden, sind überlappend angeordnet. Die erste Ergänzungsanzeige 37 wird hierbei teilweise von der zweiten Ergänzungsanzeige 38 überlappt, also teilweise verdeckt. Die zweite Komponente 24.2 wird im Verfahren 100 durch die in FIG 3 nicht näher gezeigte Künstliche Intelligenz 62 also ursächlich bzw. als zumindest wahrscheinlichste Ursache für den baugruppenspezifischen Alarmzustand 30 aus dem zweiten Schritt 120 erkannt. Dementsprechend wird die zweite Ergänzungsanzeige 38 im fünften Schritt 150 auf der graphischen Benutzeroberfläche 15 so angezeigt, dass die zugehörige Statusanzeige 47 unverdeckt ist. Das unverdeckte Anzeigen erfolgt dadurch, dass die zweite Ergänzungsanzeige 38 in der graphischen Benutzeroberfläche 15 als oberste Lage bzw. Schicht angezeigt wird. Hierdurch erfolgt im Einquadrantenbetrieb bzw. bei Nichtvorliegen des Mehrquadrantenbetriebs eine für den Benutzer sinnfällig sortierte Anzeige des vorliegenden Alarms, insbesondere von baugruppenspezifischen Alarmzuständen 30, vor.

## Patentansprüche

1. Verfahren (100) zum Warnen eines Benutzers einer Operator Station (10) einer Automatisierungsanlage (20), die eine Mehrzahl an Baugruppen (22) umfasst, die jeweils mit einer Mehrzahl an Sensoren (26) ausgestattet sind, umfassend die Schritte:
a) Bereitstellen der Automatisierungsanlage (20) und der Operator Station (10) in einem aktiven Betriebszustand;
b) Erfassen einer physikalischen Größe (13) und/oder einer Steuergröße (11) durch einen der Sensoren (26), anhand dessen ein baugruppenspezifischer Alarmzustand (30) erkannt wird und Ausgeben des baugruppenspezifischen Alarmzustands (30) an den Benutzer;
c) Ermitteln zumindest eines vorgebbaren Warnmeldungsparameters (35) des baugruppenspezifischen Alarmzustands (30);
d) Visuell überlappungsfreies Ausgeben einer Ergänzungsanzeige (18, 37, 38) über eine graphische Benutzeroberfläche (15) der Operator Station (10), die durch den Warnmeldungsparameter (35) mit dem baugruppenspezifischen Alarmzustand (30) verknüpft ist, wenn ein Mehrquadrantenbetrieb der graphischen Benutzeroberfläche (15) vorliegt.

2. Verfahren (100) nach Anspruch 1, **dadurch gekennzeichnet, dass** im Schritt d) eine Mehrzahl an Ergänzungsanzeigen (18,3 7, 38) visuell überlappungsfrei über die graphische Benutzeroberfläche (15) der Operator Station (10) ausgegeben werden.

3. Verfahren (100) nach Anspruch 1 oder 2, **dadurch gekennzeichnet, dass** zumindest eine Ergänzungsanzeige (18) jeweils als Statusanzeige (47) einer Komponente (24, 24.1, 24.2) der zugehörigen Baugruppe (22) ausgebildet ist oder als Eingabeoberfläche (45) für eine Steuerung zumindest einer Komponente (24. 24.1, 24.2), die zur Baugruppe (22) des baugruppenspezifischen Alarmzustands (30) zugehörig ist.

4. Verfahren (100) nach einem der Ansprüche 1 bis 3, **dadurch gekennzeichnet, dass** bei einem Einquadrantenbetrieb der graphischen Benutzeroberfläche (15) in einem Schritt e) eine Mehrzahl an Ergänzungsanzeigen (18, 37, 38) visuell überlappend über die graphische Benutzeroberfläche (15) ausgegeben werden, wobei die Statusanzeige (47) der Komponente (24, 24.1, 24.2) unverdeckt angezeigt wird, die als ursächlich für den baugruppenspezifischen Alarmzustand (30) erkannt wird.

5. Verfahren (100) nach einem der Ansprüche 1 bis 4, **dadurch gekennzeichnet, dass** die Komponente (24, 24.1, 24.2) als ursächlich für den gruppenspezifischen Alarmzustand (30) erkannt wird, an der der Sensor (26) angeschlossen ist, anhand dessen der baugruppenspezifische Alarmzustand (30) im Schritt b) erkannt wird.

6. Verfahren (100) nach einem der Ansprüche 1 bis 5, **dadurch gekennzeichnet, dass** der Schritt d) oder der Schritt e) durch einen Funktionsaufruf durch den Benutzer auf der graphischen Benutzeroberfläche (15) ausgelöst wird.

7. Verfahren (100) nach einem der Ansprüche 1 bis 6, **dadurch gekennzeichnet, dass** der Warnmeldungsparameter (35) durch einen Benutzer oder eine Künstliche Intelligenz (62) vorgegeben ist.

8. Verfahren (100) nach einem der Ansprüche 1 bis 7, **dadurch gekennzeichnet, dass** im Schritt b) eine Mehrzahl an baugruppenspezifischen Alarmzuständen (30) erkannt wird und die Schritte c) und d) oder c) und e) für einen von einem Benutzer ausgewählten baugruppenspezifischen Alarmzustand (30) ausgeführt werden.

9. Verfahren (100) nach Anspruch 8, **dadurch gekennzeichnet, dass** im Schritt d) eine erste Ergänzungsmeldung (37) gemäß ihrem Warnmeldungsparameter (35) überlappungsfrei angezeigt wird und eine zweite Ergänzungsmeldung (38) in einem Bereich der graphischen Benutzeroberfläche (15) angezeigt wird, der vom Warnmeldungsparameter (35) der ersten Ergänzungsmeldung (37) nicht erfasst ist.

10. Computerprogrammprodukt (60) zum Steuern einer Automatisierungsanlage (20), die über eine Mehrzahl an Baugruppen (22) mit jeweils einer Mehrzahl an Sensoren (26) verfügt, und das Computerprogrammprodukt (60) zu einem Empfangen von Daten der Sensoren (26) ausgebildet ist, **dadurch gekennzeichnet, dass** das Computerprogrammprodukt (60) zum Durchführen eines Verfahrens (100) nach zumindest einem der Ansprüche 1 bis 9 eingerichtet ist.

11. Steuereinheit (40) zum Steuern einer Automatisierungsanlage (20), die eine Mehrzahl an Baugruppen 22() aufweist, die jeweils mit einer Mehrzahl an Sensoren (26) versehen sind, wobei die Steuereinheit (40) über eine Recheneinheit (42) und eine Speichereinheit (44) zum Ausführen eines Computerprogrammprodukts (60) aufweist, **dadurch gekennzeichnet, dass** das Computerprogrammprodukt (60) nach Anspruch 10 ausgebildet ist.

12. Automatisierungsanlage (20), umfassend eine Mehrzahl an Baugruppen (22) mit jeweils einer Mehrzahl an Sensoren (26), die jeweils über eine kommunikative Datenverbindung (16) mittelbar oder unmittelbar mit einer Steuereinheit (40) verbunden sind, **dadurch gekennzeichnet, dass** die Steuereinheit (40) nach Anspruch 11 ausgebildet ist.
